# EUROPEAN PATENT SPECIFICATION

(11) **EP 1 580 831 B1**
(45) Date of publication and mention of the grant of the patent: **18.06.2008**
(21) Application number: 05006162.1
(22) Date of filing: 21.03.2005
(51) Int. Cl.: H01M 8/12, H01M 8/24, H01M 8/10

(54) **Solid-state polyelectrolyte type fuel cell**
Feststoff-Brennstoffzelle des Polyelektrolyt-Typs
Pile à combustible de type polyélectrolyte à l'état solide

(30) Priority: 22.03.2004 JP 2004082734
(43) Date of publication of application: 28.09.2005
(73) Proprietor: IBIDEN CO., LTD., Ogaki-shi, Gifu 503-0917 (JP)
(72) Inventor: Amino, Toshikazu, Ibi-gun Gifu 501-0601 (JP)
(74) Representative: Grünecker, Kinkeldey, Stockmair & Schwanhäusser Anwaltssozietät

(56) References cited:
- US-B1- 6 291 091
- US-B1- 6 593 022
- PATENT ABSTRACTS OF JAPAN vol. 1999, no. 13, 30 November 1999 (1999-11-30) -& JP 11 224677 A (DENSO CORP), 17 August 1999 (1999-08-17)
- MEHTA V ET AL: "Review and analysis of PEM fuel cell design and manufacturing" JOURNAL OF POWER SOURCES, ELSEVIER, AMSTERDAM, NL, vol. 114, no. 1, 25 February 2003 (2003-02-25), pages 32-53, XP004412816 ISSN: 0378-7753
- PATENT ABSTRACTS OF JAPAN vol. 2000, no. 01, 31 January 2000 (2000-01-31) & JP 11 297344 A (TOHO GAS CO LTD), 29 October 1999 (1999-10-29)
- PATENT ABSTRACTS OF JAPAN vol. 2002, no. 08, 5 August 2002 (2002-08-05) & JP 2002 124273 A (MITSUBISHI RAYON CO LTD), 26 April 2002 (2002-04-26)

## Description

This application claims the priority of the Japanese Patent Application No. 2004-82734 filed on March 22, 2004.

### Field of the Invention

The present invention generally relates to a solid-state polyelectrolyte type fuel cell usable as an installed- or transportable-use small power source, and more particularly to a solid-state polyelectrolyte type fuel cell including a honeycomb structure formed from a solid-state polyelectrolyte membrane to have multiple honeycomb channels, with a fuel electrode or air electrode being formed on the inner wall of each the honeycomb channels and the honeycomb channels being disposed alternately for the fuel and air electrodes to adjoin each other.

### Background Art

The fuel cell of this solid-state polyelectrolyte type is easy to assemble because of its lineup of components. Since a polymer membrane is used as the electrolyte, the fuel cell can easily be designed compact. Also, this fuel cell can operate at a temperature of about 100°C, which is rather lower than those of fuel cells of other types. Therefore, the solid-state polyelectrolyte type fuel cell has recently gained the spotlight as a small power source for installed or transportable use.

In the typical conventional solid-state polyelectrolyte type fuel cells, an electrode layer as a fuel or air electrode is formed on either side of a sheet-like polyelectrolyte membrane. A carbon fiber felt layer is disposed as a diffusion zone on the outer surface of the electrode layer, and the carbon fiber felt is sandwiched at the outer surface thereof between two plate-shaped separators (bipolar plate) to form a so-called planar "unit cell". A plurality of such unit cells is stacked one on the other with a packing and sealing member being interposed between them to form a cell stack. In the fuel cell of this type, a coolant channel is formed as necessary between the separators of each unit cell, and the temperature of the cell stack is controlled with a coolant.

The reason why the solid-state polyelectrolyte type fuel cell uses the stack structure as above is that the voltage of each unit cell is as low as 1 V or less and a stack of multiple unit cells connected in series to each other will be able to provide a high voltage when the fuel cell is practically used. Also, such stacks may be connected in parallel to each other to form a large-capacity cell.

The conventional fuel cell having the aforementioned planar cell stack structure uses a separator to isolate a fuel and oxidizing gas from each other. Since the separator has a large volume and accounts for a considerable part of the volume of the solid-state polyelectrolyte type fuel cell, it should be designed thin and compact for a compact design of the fuel cell itself. However, if the gas channel is formed shallow and narrow for the purpose of such a compact design, the pressure loss will be caused to be larger with a result that the fuel and oxidizing gas will not flow smoothly through the respective channels. Also, if the gas channel is formed thin, the gas will possibly leak and also its self-holding strength will be lower. Therefore, the solid-state polyelectrolyte type fuel cell having the planar cell stack structure cannot be designed so compact (cf. the Japanese unexamined patent publication (KOKAI) No. 2003-45456 or 2003-151611).

Further, since there exists a contact electrical resistance between the separator and electrodes, between the separator and diffusion zone or between the separators themselves, the separator itself has a peculiar electrical resistance and also the voltage will be lost due to the stacking, it is a reality that acquisition of a desired voltage from the conventional solid-state polyelectrolyte type fuel cell having the planar cell stack structure needs an extra number of cells additionally provided.

To solve the above problems, it has heretofore been proposed to use a solid-state polyelectrolyte type fuel cell of a type using no such separator as disclosed in the Japanese unexamined patent publication (KOKAI) No. 2002-124273 or 2002-260685.

In these conventional fuel cells, the electrolyte membrane itself is designed cylindrical and there is provided a mechanism to isolate a fuel and oxygen from each other, which makes it unnecessary to use any aforementioned separator. However, since the cylindrical membrane is formed from a soft polymer material, it cannot securely hold itself, is easily deformable and cannot assure any satisfactory channel for circulation of a gas or liquid such as a fuel, oxidizing gas or the like. Moreover, to have a large power-generation area, multiple cylindrical membranes should be bundled together. In this case, the fuel and oxidizing gas inlets and outlets, power lead-out terminal, coolant inlet and outlet, if any provided when it is necessary to control the temperature, etc. have to be disposed very elaborately.

Also, a solid-state oxide type fuel cell which does not use any separator as above has been proposed as disclosed in the Japanese unexamined patent publication No. 297344 of 1999.

In this fuel cell, a solid-state electrolyte formed from a ceramic material is molded into a honeycomb structure, an electrode is formed on the isolation wall of each structure, each of a fuel and oxidizing gas is circulated through a specific one of such channels. In this fuel cell disclosed in this patent document, however, both the axial end faces of the electrolyte-made honeycomb structure are held tight between a power terminal and a push plate having a gas inlet/outlet function. The shape of this fuel cell has to be retained with only the strength of the electrolyte-made honeycomb structure itself. Therefore, this type of fuel cell may not be formed from a soft material such as a solid-sate polyelectrolyte membrane, and the push plate with the function of fuel and oxidizing gas introduction/drainage is poor in sealing performance with a possibility that a fuel and oxidizing gas will mix together.

The Japanese Patent Application JP 112 246 77 discloses a polymer electrolyte fuel cell with a honeycomb structure formed by a solid-state polyelectrolyte membrane. The structure includes a plurality of honeycomb channels with polygonal cross-section disposed in a raw, and being separated one from the other by an isolation wall. The honeycomb channels have alternately a fuel electrode and an air electrode disposed on an inner wall thereof, to provide respectively a fuel and an air electrode channel.

### Disclosure of the Invention

It is an object of the present invention to overcome the above-mentioned drawbacks of the related art by providing an improved solid-state polyelectrolyte type fuel cell.

It is another object of the present invention to provide a solid-state polyelectrolyte type fuel cell capable of easily keeping the gas-tightness of the cell without using any gas separator which is necessary in the conventional solid-state polyelectrolyte type fuel cells.

It is still another object of the present invention to provide a solid-state polyelectrolyte type fuel cell capable of attaining a high efficiency of power generation with the resistance-caused heat production being decreased by reducing the electrical resistance of the entire cell.

It is yet another object of the present invention to provide a solid-state polyelectrolyte type fuel cell having a compact body reduced in weight by omitting the cooling unit which is necessary in the conventional solid-state polyelectrolyte type fuel cells.

The above objects of the present invention can be attained by providing a solid-state polyelectrolyte type fuel cell, in which:
a honeycomb structure, including a plurality of honeycomb channels each having a polygonal cross section and which are disposed in a row with adjacent ones with adjacent ones being isolated from each other with an isolation wall, is formed from a solid-state polyeletrolyte membrane;
each of some of the honeycomb channels has a fuel electrode disposed on the inner wall thereof to provide a electrode channel while each of the other has an air electrode disposed on the inner wall thereof to provide an air electrode; and
the fuel and air electrode channels are disposed to adjoin each other with the isolation wall being laid between them.

In the above solid-state polyelectrolyte type fuel cell according to the present invention, the cross section of the channel is triangular, rectangular, hexagonal or polygonal shape, and the honeycomb channel has any one, or a combination of two or more, of the cross sections.

In the above solid-state polyelectrolyte type fuel cell according to the present invention, the honeycomb structure is formed from a corrugated joined assembly.

In the above solid-state polyelectrolyte type fuel cell according to the present invention, the honeycomb structure is a extrusion-molded multi-cell structure having a polygonal cross section, and a material for forming each of the fuel and air electrodes is precipitated or deposited on either side of the isolation wall between the fuel and air electrode channels by electroless plating using a plating solution containing a metal complex.

Also the above solid-state polyelectrolyte type fuel cell according to the present invention is formed from an aggregate of a plurality of the honeycomb structures each as a unit element, disposed in series to each other axially of the honeycomb channel.

The above solid-state polyelectrolyte type fuel cell according to the present invention is formed from an aggregate of a plurality of the honeycomb structures each as a unit element, disposed in parallel to each other in a direction perpendicular to the axis of the honeycomb channel.

The above solid-state polyelectrolyte type fuel cell according to the present invention is formed from a combination of the aggregate of a plurality of the honeycomb structures each as a unit element, disposed in series to each other axially of the honeycomb channel, and the aggregate of a plurality of the honeycomb structures each as a unit element, disposed in parallel to each other in a direction perpendicular to the axis of the honeycomb channel.

In the above solid-state polyelectrolyte type fuel cell according to the present invention, of the honeycomb structure or aggregate of the honeycomb structures, at least one of the outer surface (lateral side), both axial open end faces and honeycomb channel inside is reinforced with a shape-retaining member.

In the above solid-state polyelectrolyte type fuel cell according to the present invention, the shape-retaining member is formed from more than one selected from resin, metal, inorganic elementary substance and a composite of these materials, and a member provided inside the honeycomb channel is formed from a porous material having through-pores.

In the above solid-state polyelectrolyte type fuel cell according to the present invention, the honeycomb structure has the fuel electrodes thereof electrically connected to each other at one of the open end faces and the air electrodes thereof electrically connected to each other at the other open end face, for the fuel and air electrodes to be wired in parallel to each other inside the unit element.

In the above solid-state polyelectrolyte type fuel cell according to the present invention, the honeycomb structure has the adjacent fuel and air electrodes thereof electrically connected to each other at both the open end faces and the fuel and air electrodes thereof electrically connected to each other at the other open end face, for the fuel and air electrodes to be is provided inside the honeycomb channel wired in series to each other inside the unit element.

According to the present invention, it is provided a solid-state polyeletrolyte fuel cell in which the gas-tightness can easily be kept and the fuel and air electrodes can be separated from each other without using any separator. Further, since the necessity of no separator necessarily leads to occurrence of no electrical resistance such as contact resistance, the present invention provides a solid-state polyelectrolyte type fuel cell extremely high in efficiency of power generation, compact and lightweight.

Further, the solid-state polyelectrolyte type fuel cell according to the present invention can operate well with using, as necessary, only a temperature controlling water-cooled tube and coolant channel formed from a part of the honeycomb channel. Therefore, the present invention can implement the lightweight design and low manufacturing and running costs, which are the drawbacks of the conventional stacked type fuel cell.

### Brief Description of the Drawings

Figs. 1(a) to 1(f) show the steps of the process of manufacturing the corrugated honeycomb structure of a fuel cell according to one embodiment of the present invention, the illustration showing substantial steps of the process.
Fig. 2 is a cross-sectional view of the corrugated honeycomb structure.
Fig. 3 conceptually illustrates the interconnection of channels by coupling pipes.
Fig. 4 is a schematic perspective view of the honeycomb structure having a rectangular cross section and used in another embodiment of the fuel cell according to the present invention.
Fig. 5 is a conceptual plan view, partially enlarged in scale, of the honeycomb structure in FIG. 4.
Figs. 6(a) and 6(b) conceptually show electrical wiring in a honeycomb structure as a unit element.
Fig. 7 is an axial-sectional view of the coupling pipes which connect the unit elements to each other.
Fig. 8 shows an example of the electrical wiring at the open end of a corrugated honeycomb structure as a unit element
Fig. 9 shows an example of the electrical wiring at the open ends of honeycomb structures each as a unit element.
Figs. 10(a) and 10(b) show examples of the electrical wiring at the open ends of honeycomb structures each as a unit element.
Figs. 11(a) and 11(b) shows other examples of the electrical wiring at the open ends of honeycomb structures each as a unit element.

### Detailed Description of the Preferred Embodiments

The solid-state polyelectrolyte type fuel cell according to the present invention includes a honeycomb structure as a body. This honeycomb structure is formed by bonding together sheet-like solid-state polyelectrolyte membranes excellent in characteristics such as durability against oxidation-reduction reaction, proton conductivity, repeated-use durability, etc. or by extrusion molding of a solid-state polyelectrolytic material.

For example, the honeycomb structure of the above first type is formed as will be described below. First, a sheet of a solid-state polyelectrolyte such as Nafion (trademark: Du Pont) or Flemion (trademark: Asahi Glass) is prepared. An electrode material is produced from platinum or an alloy of platinum and ruthenium carried by a carbon black such as Vulcan(trademark: Cabot). The electrode material and a commercially available 5% Nafion are mixed together to provide a mixture paste. The solid-state polyelectrolyte sheet is coated on the surface thereof with the mixture paste by printing, and then dried. Next, polygonal jigs (e.g., triangle pole-shaped core) are placed between two such sheets, and this assembly is hot-pressed to form a corrugated laminar assembly. Thus, there is provided a corrugated honeycomb structure having a plurality of honeycomb channels whose cross section is triangular.
The honeycomb structure of the above second type is formed as will be described below. Shortly, a honeycomb structure having a plurality of honeycomb channels whose cross section is polygonal shape) is formed directly by extrusion molding. To produce this type of honeycomb structure, a solution of a solid-state polyelectrolytic material is first extruded to mold a plurality of honeycomb channels integrally with each other all at once. Then, on either side of the solid-state polyelectrolyte membrane thus formed, there is precipitated or deposited an electrode layer of platinum or a platinum-ruthenium alloy carried by a carbon black such as Vulcan by electroless plating in a plating solution containing a metal complex. Finally, this product is dried and heated to yield the honeycomb structure.

The solid-state polyelectrolytic material should be highly workable and able to form a thin isolation wall in addition to having the aforementioned excellent characteristics such as durability against oxidation-reduction reaction, proton conductivity, durability against repeated use, etc. A preferable solid-state polyelectrolytic material is an ion-exchange resin, for example, (1) a fluorocarbon resin of perfluorosulfonic acid origin, (2) dry mixture of perfluorosulfonic acid origin and silica sol, (3) a heat-resistant hydrocarbon polymer (simple substance) obtained by sulfonating a polysulfone, polybenzimidazole, polyetheretherketone or the like, (4) a polymer blend of two or more of the (3), (5) a graft polymer of the (3), or (6) a composite of any of the (1) to (5) and inorganic fine particles.

As mentioned above, each unit element (honeycomb structure) of a honeycomb aggregate has either a fuel electrode or air electrode formed on the surface of a part (solid-state polyelectrolyte membrane) forming the isolation wall of the unit element. Each of the honeycomb cells provides either a fuel or air channel depending upon whether the electrode on its wall is a fuel electrode or air electrode, with adjacent honeycomb channels being of different polarities, respectively.

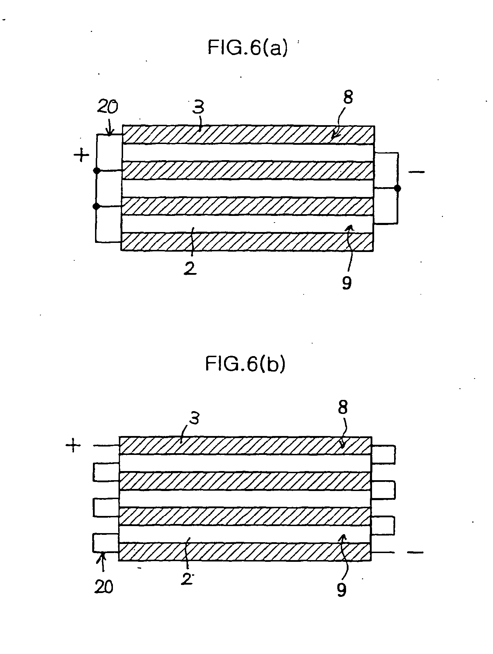

For parallel wiring of the electrodes in the unit element (honeycomb structure), the fuel electrodes are electrically wired to each other at one of the open end faces while the air electrodes are electrically wired to each other at the other open end face. Thus, in the unit element, the electrodes of the same type are connected in parallel to each other, and the fuel electrode serves as an anode while the air electrode (oxidizing gas electrode) serves as a cathode (see Fig. 6(a)).

Alternatively, for series wiring of electrodes of the same type in the unit element (honeycomb structure), the adjacent fuel and air electrodes are connected to each other at both the open end faces. Thus, in the unit element, the electrodes of the same type are connected in series to each other, and one of the open end faces of the unit element serves as an anode while the other open end serves as a cathode (see Fig. 6(b)).

The electrodes are connected to each other as above by a combination of a press-fittable carbon-made connecting terminal and a sheathed copper wire, a combination of a metal-pin connecting terminal with a corrosion-resistant coating applied by metal plating or the like and a sheathed metal wire, or the like.

Note that in the present invention, the electrodes are connected either in series or in parallel at each end face depending upon the circuit design (voltage and current) or these two ways of connection may be adopted in combination as the case may be.

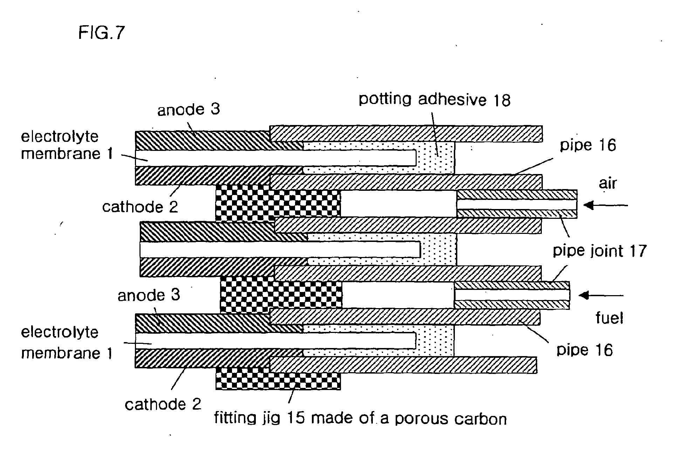

Fig. 7 is an axial-sectional view of the pipe units connecting the unit elements (honeycomb structure) to each other. As shown in Fig. 7, each pipe unit includes a fitting jig 15 formed from a porous carbon, a pipe 16 formed from carbon or metal and a joint 17. At the open end of each unit element (honeycomb structure), the pipe is inserted in each of the fuel and electrode channels. An adhesive 18 should preferably be filled by potting in the space between adjacent pipe units 16 to gang the pipes 16 together.

By coupling the pipes to each other as above, the fuel electrode channels are connected and communicated with each other (the air electrode channels are also connected and communicated with each other) so that air (oxidizing gas) and fuel fluid (hydrogen or methanol) will flow through a series of fuel electrode channels and a series of air electrode channels, respectively.

Note that in case the honeycomb channel has a rectangular cross section, the pipe should preferably be a prismatic one. However, in case the honeycomb channel has any other sectional shape, the pipe may have a columnar section, such as conical, pyramidal, cylindrical or similar sectional shape.

When the pipe unit is introduced into an end cell of each of the air and fuel electrode channels in the honeycomb structure, the fitting jig 15 made of a porous carbon is put into contact with a cathode electrode 2 or anode electrode 3 formed on the surface of an electrolyte membrane 1. Also, the adjacent pipes are coupled with an adhesive layer to each other and thus fixed to form a pipe gang.

Thus, air or fuel can be supplied to the cathode electrode 2 or anode electrode 3 in the honeycomb structure through the pipe 16 via the pipe joint 17 also included in the pipe unit. Forced to flow in the reverse direction, air or fuel gas can drain off to outside the honeycomb structure. A plurality of pipe joints may of course be connected in series or in parallel.

Note that the electrodes can be electrically wired directly from the fitting jig 15 or via an electrically conductive adhesive.

Also, the porous carbon-made fitting jig 15, if formed long along the axis of channel, can serve as an intra-channel support.

Also, since the honeycomb structure according to the present invention is formed mainly from the solid-state polyelectrolyte membrane, its shape retention is limited, more than at least one of the outer surface (outer wall), end face of the pipe at the axial opening (at the pipe-gang side) and honeycomb-channel inner wall should preferably be reinforced with a shape-retaining member.

The shape-retaining member may be any one of inorganic materials such as ceramic, metal, alloy, resin and a plate or column formed from a combination of any selected ones of such materials. For reinforcing the outer surface of the honeycomb structure, the shape-retaining member should preferably be a resin or ceramic which has a high electrical insulation resistance and strength of structure, while for reinforcing the honeycomb-channel inner wall, an electrically conductive carbonaceous material or a metal with corrosion-protection coating is effectively usable to maintain an internal pressure, prevent gas leak and retain the cell shape.

Note that the ceramic used as the shape-retaining member may be one selected from general-purpose ceramics such as alumina, mullite, glass, carbon, silicon nitride, zirconia, cordierite and porcelain, the metal may be one of general-purpose metals including aluminum, stainless steel, iron, copper, titanium and nickel, or the alloy thereof, and the resin may be selected from general-purpose resins such as polypropylene, polyethylene or acrylic, and fluorocarbon resins and engineering plastics including polyimide, polyamide and polycarbonate. Even if selected, however, these materials should be processed (by applying a nonconductive layer or by plating gold, for example) for assuring the heat resistance and corrosion resistance at an operating temperature and in an atmosphere at the time of power generation and for blocking any eluates such as ions which will degrade the electrolyte membrane.

In the solid-state polyelectrolyte type fuel cell according to the present invention, the corrugated honeycomb structure, or the honeycomb structure whose channels are formed integrally by extrusion molding, is used as a unit element. According to the present invention, the solid-state polyelectrolyte type fuel cell can be embodied mainly in the following types. Firstly, such a unit element is used as a monolith type as it is; secondly, a plurality of such unit elements is disposed in series to each other axially of their honeycomb channels; thirdly, a plurality of such unit elements is disposed in a bundle in parallel to each other in a direction perpendicular to the axis of their honeycomb channels; and fourthly, a plurality of such unit elements is disposed as an aggregated combination of the third and fourth types.

In a fuel cell of the above-mentioned monolith type formed by designing the unit element simply large (like the first type), the electrical resistance in the cell is high while the output of the fuel cell is low. In a fuel cell formed from the above-mentioned aggregated combination of the unit elements (like the fourth type), since each of the unit elements is so small that the electrical resistance in the cell is lower and thus the fuel cell of this type will show an improved performance as a cell.

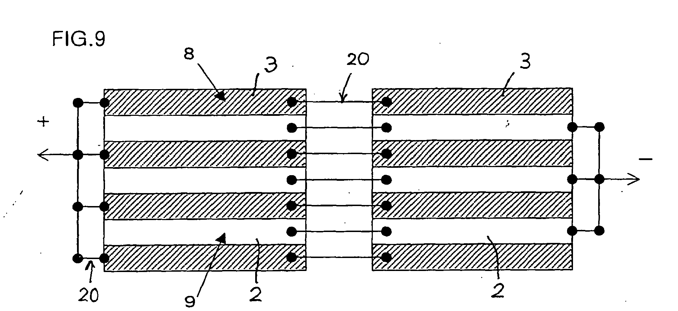

As shown in Fig. 9 for example, in a fuel cell in which two honeycomb structures as the unit elements are disposed in series to each other axially of the honeycomb channels, the fuel electrodes are electrically connected to each other at the open end face of one of the unit elements and the air electrodes are electrically connected to each other at the open end face of the other unit element.

Also, two unit elements (honeycomb channels) are electrically connected to each other at the end faces thereof for the fuel and air electrodes of each unit element to have the same polarity.

By connecting the two unit elements to each other as above, their electrodes can be connected in parallel to each other, with the fuel electrode serving as an anode while the air electrode (oxidizing gas electrode) serves as an cathode.

In this case, since the unit elements (honeycomb channels) can be connected to each other via the pipe units, each pipe unit will enable a continuous gas supply and electrical connection between the unit elements simultaneously.

Note that the unit elements may be so connected to each other by providing, in the pipe unit shown in Fig. 7, another fitting jig 15 similar to the fitting jig provided at the left open end of the pipe 16 in place of the pipe joint 17 provided at the right open end of the pipe 16, and inserting the alternate fitting jig 15 into the end cell of the air electrode or fuel channel of another honeycomb structure as a unit element which is to be connected to these unit elements connected as above.

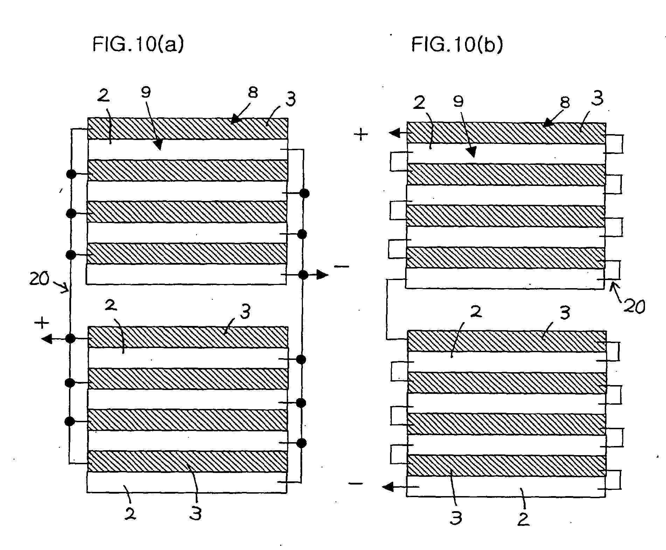

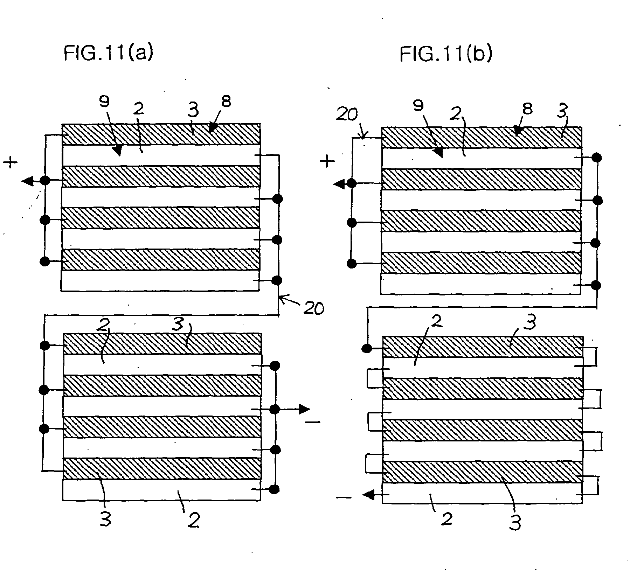

Further, in a fuel cell in which a plurality of unit elements is disposed in a bundle in parallel to each other in a direction perpendicular to the axis of their honeycomb channels, the unit elements can be electrically wired to each other by repeating the connection as shown in Fig. 6 (also see Figs. 10(a) and 10(b)) and also they can be wired in series to each other (also see Figs. 11(a) and 11(b)). In each drawing, the wire is indicated with a reference numeral 20.

In the solid-state polyelectrolyte type fuel cell according to the present invention, not only hydrogen gas but a liquid such as methanol, ethanol or dimethyl ether can be used as a fuel for the anode. Especially, the fuel cell using methanol as the fuel is called "direct methanol type fuel cell (DMFC)". This type of fuel cell needs not any reformer to extract hydrogen from a fuel and any hydrogen container, and can solve the problems such as response to load fluctuation and starting loss. In addition, its system is so simple and compact that this type of fuel cell is advantageous in both manufacturing and running costs.

The present invention of the solid-state polyelectrolyte type fuel cells will be described in further detail referring to the below examples.

### Example 1:

### (A solid-state polyelectrolyte type fuel cell including a corrugated honeycomb structure)

As a first one of the embodiments of the present invention, the solid-state polyelectrolyte type fuel cell was produced as will be described below:

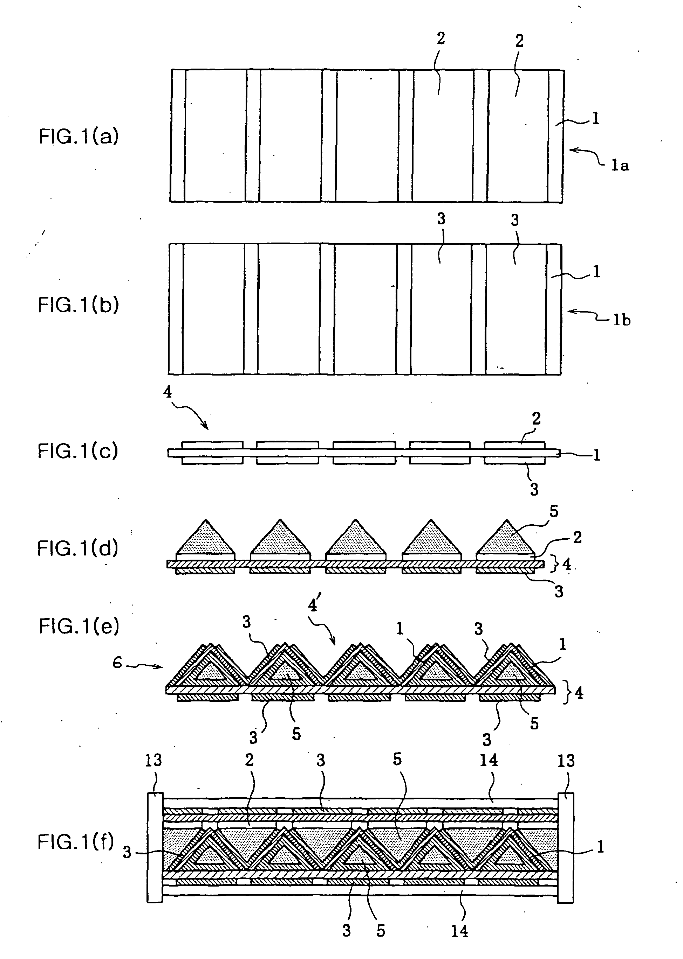

First, the air electrode is formed as follows. Platinum-carrying carbon black (TEC10E50E, Pt in 50% by Tanaka Kikinzoku), 5% Nafion-117(trademark: Du-Pont) and butyl acetate were mixed together to produce a paste of 30% by weight in solid-content concentration. This paste was printed in a pattern shown in Fig. 1(a) by screen printing on one surface 1a of a commercially available solid-state polyelectrolyte membrane 1 (SH-50, 50 µm thick by Asahi Glass). Then, the solid-state polyelectrolyte membrane 1 was dried at 80°C in an oven to form 15 µm-thick cathode catalyst layers 2 each being to serve as an air electrode.

Next, Pt-Ru-carrying carbon black (TEC61E54, Pt in 30.4% and Ru in 23.6% by Tanaka Kikinzoku), 5% Nafion-117 and butyl acetate were mixed together and conditioned to provide a paste of 35% by weight in solid-content concentration. This paste was printed in a pattern shown in Fig. 1(b) by screen printing on a surface 1b of the solid-state polyelectrolyte membrane 1, opposite to the cathode catalyst layer 2. Then, the solid-state polyelectrolyte membrane 1 was dried to form anode catalyst layers 3 each being to serve as a fuel electrode. Thus, there was prepared a solid-state polyelectrolyte membrane-electrode joined assembly 4 of the cathode catalyst layers 2, solid-state polyelectrolyte membrane 1 and anode catalyst layers 3 as shown in the sectional view in Fig. 1(c).

Next, a solution of 5% Nafion-117 was applied to the surface of the joined assembly 4, on which no cathode catalyst layers 2 were formed. Then, a triangle pole-shaped jig (core) 5 made of porous carbon and whose corners were planed off was disposed on each cathode catalyst layer 2 with one of the sides of the triangle being placed in contact with the cathode catalyst layer 2 as shown in Fig. 1(d).

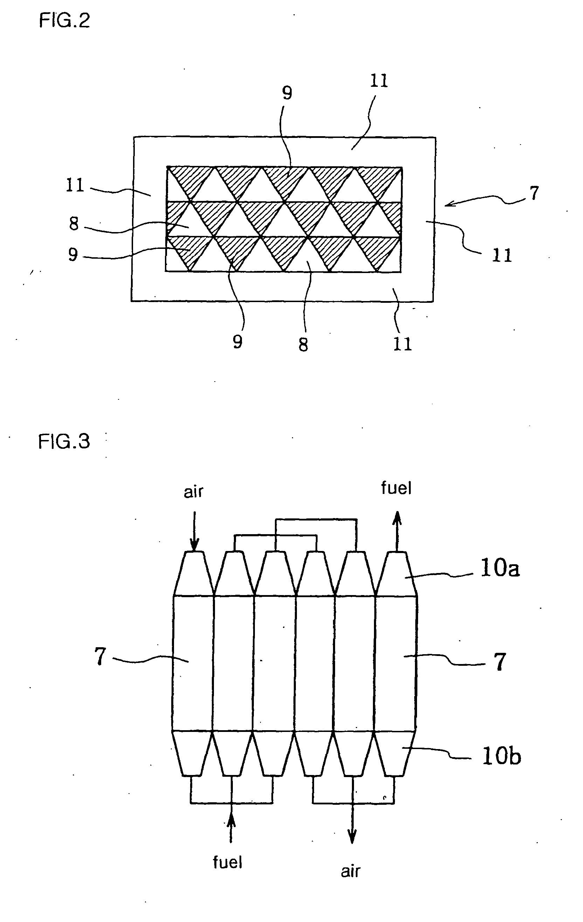

Then, there was separately prepared a joined assembly 4' similar to the joined assembly 4 shown in Fig. 1(c), i.e. the cathode catalyst layer 2 and anode catalyst layers 3 are formed on each surface of the solid-state polyelectrolyte membrane 1. It was disposed on the joined assembly 4, more particularly, on the triangle pole-shaped jig 5, so that the side thereof with no cathode catalyst layers were put in touch with the remaining two sides of the triangular cross section of the triangle pole-shaped jig 5, to thereby form a corrugated laminar assembly 6 as shown in Fig. 1(e). Further, another joined assembly 4 was placed on the corrugated laminar assembly 6 with the triangle pole-shaped jig 5 thereof being fitted in each concavity defined between the inclined anode catalyst layers 3 as shown in Fig. 1(f). Thus, a corrugated structure 7 was obtained in which the solid-state polyelectrolyte membrane 1 was sandwiched between the joined assemblies 4 and 4'. Three such corrugated structures 7 were stacked one on the other as shown, by way of example, in the cross-sectional view given in Fig. 2. It should be noted that 5% Nafion-117 was applied to the junction between the solid-state polyelectrolyte membranes to join them to each other.

Thereafter, the corrugated structure 7 including the triangle pole-shaped jigs 5 was hot-pressed at a temperature of 130°C under a pressure of 10 MPa for 10 minutes. The corrugated honeycomb structure 7 thus formed was 5 mm in length of one side of the triangular cross section, 15 × 20 mm in sectional area and 30 mm in length.

In each of the end openings of the honeycomb structure 7, there was fitted a pyramidal pipe coupling fuel electrode channels 8 or air electrode channels 9 to each other. The pyramidal pipes thus fitted were coupled to each other by potting with an epoxy adhesive to form the pipe gangs 10a and 10b. The lateral sides of the corrugated honeycomb structure 7, except for both end faces, were reinforced with alumina shape-retaining plates 11.

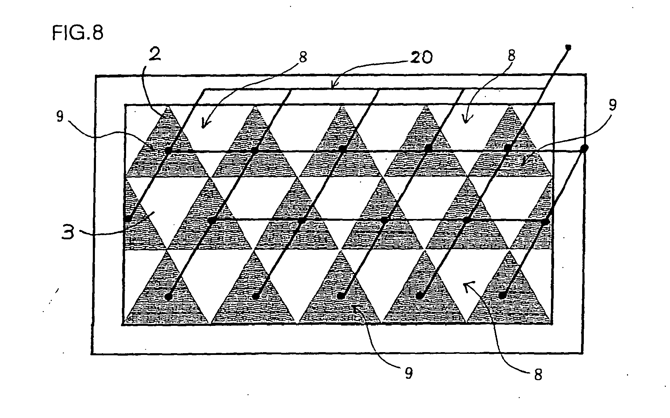

Also, the circuit of this honeycomb structure was designed such that the air electrode channels 9 were connected in parallel to each other at one end of the honeycomb structure, while the fuel electrode channels 8 were connected in parallel to each other at the other end, as shown in Fig. 8.

As shown in Fig. 3, pure hydrogen and air supplied from outside and humidified through a bubbler while being kept at 70°C by a heater were passed through the honeycomb structure 7 constructed as above. It should be noted that the hydrogen gas was supplied at a rate of 45 cm³/min and air was supplied at a rate of 32 cm³/min. The current-output characteristic of this fuel cell was 0.5 W/cm² at a current of 0.8A per cell.

### Example 2:

### (A solid-state polyelectrolyte type fuel cell including square extrusion-molded honeycomb structures (direct methanol type: DMFC))

As a second one of the embodiments of the present invention, the solid-state polyelectrolyte type fuel cell was produced as will be described below:

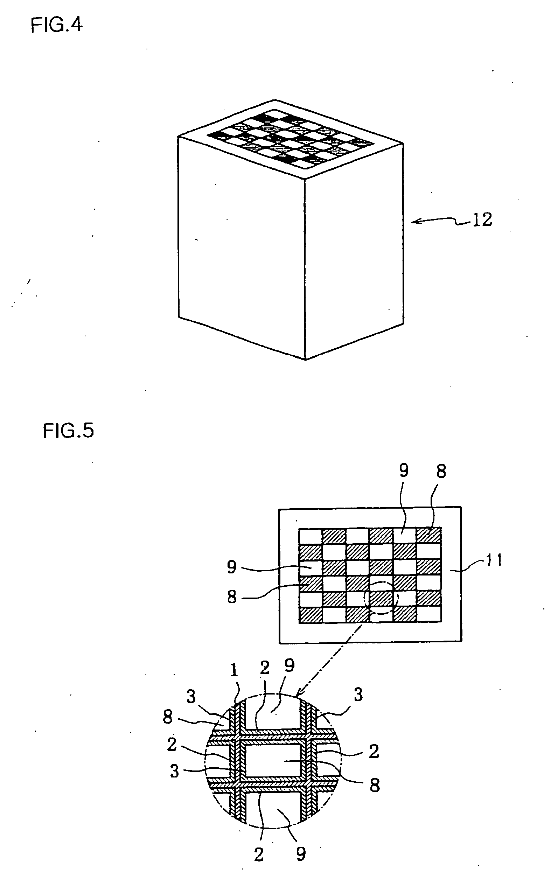

First, a fluorocarbon resin of perfluorosulfonic acid origin selected for the solid-state polyelectrolyte membrane 1 was processed by an extrusion molding machine to form a honeycomb structure 12 (about 2 cm vertically and horizontally) having a side length of 2 mm, a rectangular cross section and a honeycomb thickness of 0,102 mm (4 mil (1 mil = 1/1000 inches)) as shown in Figs. 4 and 5. The honeycomb structure 12 was dried at 120°C for 1 hour, and then cut to a length of about 3 cm axially of the honeycomb channel. The honeycomb structure 12 formed from the solid-state polyelectrolyte membrane 1, thus formed, cannot retain its own shape unless appropriately processed. For the self-retention of shape, a 0.8 mm-thick shape-retaining plate 11 of a reinforcing polypropylene resin was attached with an adhesive to each of outermost sides of the honeycomb structure 12, and the shape-retaining plates 11 were joined at their corners to each other.

The pipe unit as shown in Fig. 7 were inserted into the corresponding end openings of the honeycomb channels (fuel electrode channels 8 and air electrode channels 9) in the honeycomb structure 12, and they were connected to alternate ones as shown in Fig. 3.

Thereafter, an aqueous solution of a mixture of 0.1 % boric sodium hydrate and 2% sodium hydrate was put into the honeycomb channel 8 serving as the fuel electrode to form the anode catalyst layer 3. On the other hand, a mixture of 0.1% chloroplatinic aqueous solution and platinum catalyst-carrying carbon black was put into the honeycomb channel 9 serving as the air channel to separate out the platinum inside the air electrode channel by chemical plating. Thus the cathode catalyst layer 2 was formed. After that, each of the honeycomb channels was washed with deionized water to remove unreacted substances.

Next, the fuel electrode channel 8 was filled with palladium-activated butyl liquid for electroless plating. After completion of a reaction at room temperature for 0.5 minute, the activated liquid was removed and the channel inside was dried. Then, a suspended mixture of Pt-Ru-carrying carbon black (TEC61E54, Pt in 30.4% and Ru in 23.6% by Tanaka Kikinnzoku), 0.1 % chloroplatinic aqueous solution and reductant liquid was supplied to the honeycomb channel 8 at a temperature of 30 ± 2 °C and rate of 20 cc/min for reaction with each other to deposit the anode catalyst layer 3 on the inner wall of the honeycomb channel 8. Thereafter, the honeycomb channel 8 was washed and dried at 80°C for 0.5 hour. The cross-section and electrode arrangement of the honeycomb structure thus formed are shown in Fig. 5. The electrodes were connected in series to each other for each type of the channels.

As shown in Fig. 5, the fuel electrode channel 8 was filled with an aqueous solution of water and methanol in a molar ratio of 1 : 1 and air was supplied to the air electrode channel 9, to thereby form the DMFC (direct methanol fuel cell). The current-output characteristic of this DMFC was 8 mW/cm² at 40 mA per cell.

## Claims

1. A solid-state polyelectrolyte type fuel cell, wherein:
a honeycomb structure (7), including a plurality of honeycomb channels (8, 9) each having a polygonal cross section and disposed in a row with adjacent ones being isolated from each other with an isolation wall (1) , is formed from a solid-state polyelectrolyte membrane;
each of some of the honeycomb channels (8, 9) has a fuel electrode (3) disposed on the inner wall thereof to provide a electrode channel (8), while each of the other has an air electrode (2) disposed on the inner wall thereof to provide an air electrode channel (9); the fuel (8) and air electrode channels (9) are disposed to adjoin each other with the isolation wall (1) being laid between them, and
a member (15) is provided inside the honeycomb channel (8, 9) and is formed from a porous material having through-pores;
**characterized in**
**that** said member (15) is designed to be inserted in the honeycomb channel (8, 9) to close an open end thereof.

2. The fuel cell as set forth in claim 1, **characterized in that** the cross section of the channel is triangular, rectangular, hexagonal or the polygonal shape, and the honeycomb channel has any one, or a combination of two or more, of the cross sections.

3. The fuel cell as set forth in claim 1 or 2, **characterized in that** the honeycomb structures is formed from a corrugated joined assembly.

4. The fuel cell as set forth in any one of the claims 1-3, **characterized in**
**that** the honeycomb structure is a extrusion-molded multi-cell structure having a polygonal cross section, and
**that** a material for forming each of the fuel and air electrodes is precipitated or deposited on either side of the isolation wall between the fuel and air electrode channels by electroless plating in a plating solution containing a metal complex.

5. The fuel cell as set forth in any one of the claims 1-4, **characterized in that** the fuel cell is formed from an aggregate of a plurality of the honeycomb structures each as a unit element, disposed in series to each other axially of the honeycomb channel.

6. The fuel cell as set forth in any one of the claims 1 -4, **characterized in that** the fuel cell is formed from an aggregate of a plurality of the honeycomb structures each as a unit element, disposed in parallel to each other in a direction perpendicular to the axis of the honeycomb channel.

7. The fuel cell as set forth in any one of the claims 1-4, **characterized in that** the fuel cell is formed from a combination of an aggregate of a plurality of the honeycomb structures each as a unit element, disposed in series to each other axially of the honeycomb channel, and an aggregate of a plurality of the honeycomb structures each as a unit element, disposed in parallel to each other in a direction perpendicular to the axis of the honeycomb channel.

8. The fuel cell as set forth in any one of the claims 1-7, **characterized in that** of the honeycomb structure, at least one of the outer surface, both axial open end faces and honeycomb channel inside is reinforced with a shape-retaining member.

9. The fuel cell as set forth in claim 8,**characterized in**
**that** the shape-retaining member is formed from at least one selected from resin, metal, inorganic elementary substance and a composite of these materials; and
**that** a member provided inside the honeycomb channel is formed from a porous material having through-pores.

10. The fuel cell as set forth in claim 5, **characterized in**
**that** the honeycomb structure is formed from an aggregate of unit elements having the fuel electrodes thereof electrically connected to each other at one of the open end faces and the air electrodes thereof electrically connected to each other at the other open end face; and
**that** the fuel and air electrodes are wired in parallel to each other inside the unit element.

11. The fuel cell as set forth in claim 6, **characterized in**
**that** the honeycomb structure is formed from an aggregate of unit elements having the adjacent fuel and air electrodes thereof electrically connected to each other at both the open end faces; and
**that** the fuel and air electrodes are wired in series to each other inside the unit element.

12. The fuel cell as set forth in claim 7, **characterized in that** the honeycomb structure is formed from a combination of:
an aggregate of unit elements having the fuel electrodes thereof electrically connected to each other at one of the open end faces and the air electrodes thereof electrically connected to each other at the other open end face; and
an aggregate of unit elements having the adjacent fuel and air electrodes thereof electrically connected to each other at both the open end faces, the fuel and air electrodes being wired in series or in parallel to each other inside the unit element.

## Patentansprüche

1. Feststoff-Brennzelle des Polyelektrolyt-Typs, wobei
eine Wabenstruktur (7) aus einer polyelektrolytischen Feststoffmembran ausgebildet ist, wobei die Wabenstruktur (7) eine Mehrzahl an Wabenkanälen (8, 9) enthält, die jeweils einen polygonalen Querschnitt aufweisen und in einer Reihe angeordnet sind, wobei benachbarte Kanäle durch eine Isolationswand (1) voneinander getrennt sind;
einige Wabenkanäle (8, 9) eine Brennstoff-Elektrode (3) aufweisen, die an deren inneren Wandung angeordnet ist, um einen Elektrodenkanal (8) vorzusehen, während die anderen Wabenkanäle (8, 9) eine Luftelektrode (2) aufweisen, die an deren inneren Wandung angeordnet ist, um einen Luftelektrodenkanal (9) vorzusehen; wobei die Brennstoff- (8) und Luftelektrodenkanäle (9) angeordnet sind, um aneinander über die dazwischen liegende lsolationswand (1) anzugrenzen, und
ein Element (15) innerhalb des Wabenkanals (8, 9) vorgesehen und aus einem porösen Material mit Durchgangsporen ausgebildet ist;
**dadurch gekennzeichnet,**
**dass** das Element (15) ausgebildet ist, in den Wabenkanal (8, 9) eingefügt zu werden, um ein offenes Ende des Wabenkanals (8, 9) zu verschließen.

2. Brennstoffzelle nach Anspruch 1, **dadurch gekennzeichnet, dass** der Querschnitt des Kanals dreieckförmig, rechteckförmig, sechseckförmig oder vieleckförmig ist, und der Wabenkanal irgendeinen oder eine Kombination von zwei oder mehreren der Querschnitte aufweist.

3. Brennstoffzelle nach Anspruch 1 oder 2, **dadurch gekennzeichnet, dass** die Wabenstruktur aus einer gerippten verbundenen Anordnung ausgebildet ist.

4. Brennstoffzelle nach einem der Ansprüche 1 bis 3, **dadurch gekennzeichnet, dass** die Wabenstruktur eine fließgepresste, mehrzellige Struktur mit einem vieleckigem Querschnitt ist, und
dass ein Material zum Ausbilden jeder der Brennstoff- und Luftelektroden durch einen stromlosen Überzug aus einer Überzugslösung mit einem Metallkomplex auf beiden Seiten der Isolationswand zwischen der Brennstoff- und Luftelektrodenkanäle abgelagert oder aufgedampft ist.

5. Brennstoffzelle nach einem der Ansprüche 1 bis 4, **dadurch gekennzeichnet, dass** die Brennstoffzelle aus einer Aggregation einer Mehrzahl an Wabenstrukturen mit jeder Wabenstruktur als eine Komponenteneinheit ausgebildet ist, wobei die Wabenstrukturen in axialer Richtung des Wabenkanals hintereinander angeordnet sind.

6. Brennstoffzelle nach einem der Ansprüche 1 bis 4, **dadurch gekennzeichnet, dass** die Brennstoffzelle aus einer Aggregation einer Mehrzahl an Wabenstrukturen mit jeder Wabenstruktur als eine Komponenteneinheit ausgebildet ist, wobei die Wabenstrukturen parallel zueinander in einer zu der Achse des Wabenkanals senkrechten Richtung angeordnet sind.

7. Brennstoffzelle nach einem der Ansprüche 1 bis 4, **dadurch gekennzeichnet, dass** die Brennstoffzelle aus einer Kombination aus einer Aggregation einer Mehrzahl an Wabenstrukturen mit jeder Wabenstruktur als eine Komponenteneinheit, wobei die Wabenstrukturen in axialer Richtung des Wabenkanals hintereinander angeordnet sind, und einer Aggregation einer Mehrzahl an Wabenstrukturen mit jeder Wabenstruktur als eine Komponenteneinheit, wobei die Wabenstrukturen parallel zueinander in einer zu der Achse des Wabenkanals senkrechten Richtung angeordnet sind, ausgebildet ist.

8. Brennstoffzelle nach einem der Ansprüche 1 bis 7, **dadurch gekennzeichnet, dass** wenigstens die äußere Oberfläche, die beiden axial offenen Endflächen oder die Wabenkanalinnenseite der Wabenstruktur mit einem formhaltenden Element verstärkt ist.

9. Brennstoffzelle nach Anspruch 8, **dadurch gekennzeichnet,**
**dass** das formhaltende Element wenigstens aus einem Harz, einem Metal, einer anorganisch elementaren Substanz oder einem Gemisch dieser Materialien ausgewählt ist; und
**dass** ein innerhalb des Wabenkanals vorgesehenes Element aus einem porösen Material mit Durchgangsporen ausgeformt ist.

10. Brennstoffzelle nach Anspruch 5, **dadurch gekennzeichnet,**
**dass** die Wabenstruktur aus einer Aggregation von Komponenteneinheiten mit an einem der offenen Endflächen elektrisch miteinander verbundenen Brennstoffelektroden und mit an der anderen offenen Endfläche elektrisch miteinander verbundenen Luftelektroden ausgebildet ist; und
**dass** die Brennstoff- und Luftelektroden parallel zueinander innerhalb der Komponenteneinheit beschaltet sind.

11. Brennstoffzelle nach Anspruch 6, **dadurch gekennzeichnet,**
**dass** die Wabenstruktur aus einer Aggregation von Komponenteneinheiten mit benachbarten an beiden offenen Endflächen elektrisch miteinander verbundenen Brennstoff- und Luftelektroden ausgebildet ist, und
**dass** die Brennstoff- und Luftelektroden in Reihe zueinander innerhalb der Komponenteneinheit beschaltet sind.

12. Brennstoffzelle nach Anspruch 6, **dadurch gekennzeichnet, dass** die Wabenstruktur aus einer Kombination ausgeformt ist aus:
einer Aggregation von Komponenteneinheiten mit an einem der offenen Endflächen elektrisch miteinander verbundenen Brennstoffelektroden und mit an der anderen offenen Endfläche elektrisch miteinander verbundenen Luftelektroden; und
einer Aggregation von Komponenteneinheiten mit benachbarten an beiden offenen Endflächen elektrisch miteinander verbundenen Brennstoff- und Luftelektroden, wobei die Brennstoff- und Luftelektroden in Reihe oder parallel zueinander beschaltet sind.

## Revendications

1. Pile à combustible de type polyélectrolyte à l'état solide, dans laquelle :
une structure en nid d'abeille (7), comprenant une pluralité de canaux en nid d'abeille (8, 9), chacun présentant une coupe transversale polygonale et disposé dans une rangée avec des canaux adjacents isolés les uns des autres par une paroi de séparation (1), est formée à partir d'une membrane polyélectrolyte à l'état solide ;
chacun de certains des canaux en nid d'abeille (8, 9) comprend une électrode à combustible (3) disposée sur la paroi intérieure de celui-ci pour fournir un canal d'électrode (8), alors que chacun des autres canaux comprend une électrode à air (2) disposée sur la paroi intérieure de celui-ci pour fournir un canal d'électrode à air (9) ; les canaux d'électrode à combustible (8) et à air (9) sont disposés de sorte qu'ils soient attenants l'un à l'autre par le biais de la paroi de séparation (1) située entre eux, et
un élément (15) est prévu à l'intérieur du canal en nid d'abeille (8, 9) et est formé à partir d'un matériau poreux comprenant des pores traversants ;
**caractérisée en ce que**
ledit élément (15) est conçu pour être inséré dans le canal en nid d'abeille (8, 9) afin de fermer une extrémité ouverte de celui-ci.

2. Pile à combustible selon la revendication 1, **caractérisée en ce que** la coupe transversale du canal présente une forme triangulaire, rectangulaire, hexagonale ou polygonale, et **en ce que** le canal en nid d'abeille comprend l'une quelconque, ou une combinaison de deux ou plus, des coupes transversales.

3. Pile à combustible selon la revendication 1 ou 2, **caractérisée en ce que** la structure en nid d'abeille est formée à partir d'un assemblage joint ondulé.

4. Pile à combustible selon l'une quelconque des revendications 1 à 3, **caractérisée en ce que**
la structure en nid d'abeille est une structure à plusieurs cellules moulée par extrusion présentant une coupe transversale polygonale, et
un matériau pour former chacune des électrodes à combustible et à air est précipité ou déposé d'un côté ou de l'autre de la paroi de séparation entre les canaux d'électrode à combustible et à air par placage anélectrolytique dans une solution de placage contenant un complexe métallique.

5. Pile à combustible selon l'une quelconque des revendications 1 à 4, **caractérisée en ce que** la pile à combustible est formée à partir d'un agrégat d'une pluralité des structures en nid d'abeille, chacune en tant qu'unité, disposées en série axialement les unes par rapport aux autres du canal en nid d'abeille.

6. Pile à combustible selon l'une quelconque des revendications 1 à 4, **caractérisée en ce que** la pile à combustible est formée à partir d'un agrégat d'une pluralité de structures en nid d'abeille, chacune en tant qu'unité, disposées parallèlement les unes par rapport aux autres dans une direction perpendiculaire à l'axe du canal en nid d'abeille.

7. Pile à combustible selon l'une quelconque des revendications 1 à 4, **caractérisée en ce que** la pile à combustible est formée à partir d'une combinaison d'un agrégat d'une pluralité des structures en nid d'abeille chacune en tant qu'unité, disposées en série axialement les unes par rapport aux autres du canal en nid d'abeille, et d'un agrégat d'une pluralité de structures en nid d'abeille chacune en tant qu'unité, disposées parallèlement les unes par rapport aux autres dans une direction perpendiculaire à l'axe du canal en nid d'abeille.

8. Pile à combustible selon l'une quelconque des revendications 1 à 7, **caractérisée en ce que** pour la structure en nid d'abeille, au moins un parmi la surface extérieure, les faces d'extrémité ouvertes axiales et l'intérieur du canal en nid d'abeille est renforcé par un élément à mémoire de forme.

9. Pile à combustible selon la revendication 8, **caractérisée en ce que**
l'élément à mémoire de forme est formé à partir d'au moins un matériau choisi parmi une résine, un métal, une substance élémentaire inorganique et un composé de ces matériaux ; et
un élément prévu à l'intérieur du canal en nid d'abeille est formé à partir d'un matériau poreux comprenant des pores traversants.

10. Pile à combustible selon la revendication 5, **caractérisée en ce que**
la structure en nid d'abeille est formée à partir d'un agrégat d'unités dont les électrodes à combustible sont reliées électriquement les unes aux autres au niveau de l'une des faces d'extrémité ouvertes et dont les électrodes à air sont reliées électriquement les unes aux autres au niveau de l'autre face d'extrémité ouverte ; et
les électrodes à combustible et à air sont câblées en parallèle les unes par rapport aux autres à l'intérieur de l'unité.

11. Pile à combustible selon la revendication 6, **caractérisée en ce que**
la structure en nid d'abeille est formée à partir d'un agrégat d'unités dont les électrodes à combustible et à air adjacentes sont reliées électriquement les unes aux autres au niveau des deux faces d'extrémité ouvertes ; et
les électrodes à combustible et à air sont câblées en série les unes par rapport aux autres à l'intérieur de l'unité.

12. Pile à combustible selon la revendication 7, **caractérisée en ce que** la structure en nid d'abeille est formée à partir d'une combinaison :
d'un agrégat d'unités dont les électrodes à combustible sont reliées électriquement les unes aux autres au niveau de l'une des faces d'extrémité ouvertes et dont les électrodes à air sont reliées électriquement les unes aux autres au niveau de l'autre face d'extrémité ouverte ; et
d'un agrégat d'unités dont les électrodes à combustible et à air adjacentes sont reliées électriquement les unes aux autres au niveau des deux faces d'extrémité ouvertes, les électrodes à combustible et à air étant câblées en série ou en parallèle les unes par rapport aux autres à l'intérieur de l'unité.
